# EUROPEAN PATENT APPLICATION

(11) **EP 3 441 040 A1**
(43) Date of publication of application: **13.02.2019**
(21) Application number: 17753165.4
(22) Date of filing: 14.02.2017
(51) Int. Cl.: A61C 3/14

(54) **TOOTH EXTRACTION INSTRUMENT**

(30) Priority: 16.02.2016 JP 2016027415
(71) Applicant: Nishio, Hidetoshi, Chiba-shi, Chiba 260-0012 (JP)
(72) Inventor: Nishio, Hidetoshi, Chiba-shi, Chiba 260-0012 (JP)
(74) Representative: Kiwit, Benedikt
(86) International application number: PCT/JP2017/005341
(87) International publication number: WO 2017/141908

(57) **Abstract**

Provided is a tooth extraction appliance enables tooth extraction to be performed appropriately without damaging a tooth and gums carelessly, tooth extraction to be performed easily and surely without requiring a large amount of labor, and all types of teeth to be extracted only with one type of appliance. The tooth extraction appliance includes a pair of arm members, each of which is rotatable centering on a connecting section as a turning fulcrum, grip sections provided to rear ends of the pair of arm members, an engagement section for an auxiliary tool provided at the tip of one of the arm members, and a pressing section provided to the tip of the other of the arm members. The tooth extraction appliance is configured so that in the state where the pressing section is applied to a supporting part in adjacent to a tooth to be extracted, and an auxiliary tool fixed beforehand to the tooth to be extracted is engaged with the engagement section for the auxiliary tool, the tooth to be extracted is extracted via the auxiliary tool from gums by gripping the grip sections for operation.

## Description

### [Technical Field]

The present invention relates to a tooth extraction appliance for extracting a tooth in a dental treatment by a dentist.

### [Background Art]

As disclosed in Patent Documents 1 and 2, for example, tooth extraction is performed using a lever and forceps in a conventional dental treatment. In this respect, several methods are available. One is to use the lever for extracting a tooth by gradually enlarging a gap between the tooth and gums by inserting a tip of the lever into the gap using a wedge action and the lever rule so as to gradually move the lever. Another is to use the forceps for dislocating a tooth by clamping the tooth with the forceps so as to slowly vibrate the tooth. Furthermore, tooth extraction is performed by holding the lever and the forceps alternately to promote tooth dislocation and finally remove the tooth by pinching the tooth with the forceps.

However, on one hand, when inserting the tip of the lever between the gap of the tooth and the gums, the position of the tip is blurred and thus likely to be unstable, involving risks such as carelessly damaging surrounding oral mucosa and gums.

On the other hand, as tooth extraction using the forceps requires to tightly grip the tooth with the tips of the forceps serving as pinching parts, it is necessary to strongly hold grip sections of the forceps. In addition, it is necessary to add a tensile force to the forceps for extracting the tooth in that state. In this way, the two kinds of actions, each of which requires a large amount of labor, need to be performed at the same time. Therefore, powerless dentists including elderlies and women are in need for a large amount of labor for tooth extraction.

Moreover, it is difficult for the tips of the forceps serving as the pinching parts to delicately control a clamping force applied to the tooth. Also, a hand can feel no sensitive reaction force of tight gripping force of the pinching parts. Accordingly, in particular when extracting an imperfect tooth such as a cavity or a lacking tooth, the gripping force might be so strong that the tooth might partially collapse, thereby making appropriate tooth extraction impossible.

Furthermore, in a series of tooth extraction processes, the method of holding the lever and the forceps alternately involves the problem of much surgical operation time with less efficiency.

Further, many types (for example, ten several types) of forceps should be prepared beforehand for tooth extraction. And, an appropriate one of them is selected depending on a tooth to be extracted. Thus, it is necessary for a dentist to select a type adapted to the tooth to be extracted each time, causing the problem of cost, management and maintenance of appliances as the many types of forceps should be prepared beforehand for tooth extraction.

### [RELATED ART DOCUMENTS]

### [PATENT DOCUMENTS]

Patent Document 1: Japanese Unexamined Patent Application Publication No. 2013-106709
Patent Document 2: Japanese Unexamined Patent Application Publication No. H11-267136.

### [Disclosure of Invention]

### [Problems to be Solved by the Invention]

The present invention was made in view of above-mentioned point, and the purpose is to provide a tooth extraction appliance that can appropriately perform tooth extraction without damaging a tooth and gums carelessly, extract the tooth easily and surely without requiring a large amount of labor and extract all types of teeth only with one type of appliance.

### [Means of Solving the Problems]

In order to solve the above-described problems, a tooth extraction appliance in accordance with the present invention includes a pair of arm members (10, 20), each of which is rotatable centering on a connecting section (11) as a turning fulcrum, grip sections (13, 23) provided to rear ends of the pair of arm members (10, 20) for operation by gripping by hand, an engagement section (12) for an auxiliary tool (40) provided to the tip of one of the arm members (10) for being engaged with the auxiliary tool (40) fixed beforehand to a tooth to be extracted, and a pressing section (22) provided to the tip of the other of the arm members (20) and applied to a supporting part (T2) for pressing the supporting part (T2). The tooth extraction appliance is configured so that in the state where the pressing section (22) is applied to the supporting part (T2) in adjacent to a tooth to be extracted (T1), and the auxiliary tool (40) fixed beforehand to the tooth to be extracted (T1) is engaged with the engagement section (12) for the auxiliary tool (40), the tooth to be extracted (T1) is extracted via the auxiliary tool (40) from gums (M) by gripping the grip sections (13, 23) by hand for operation.

According to the tooth extraction appliance of the present invention, in the state where the pressing section is applied to something such as another tooth in adjacent to the tooth to be extracted, and the auxiliary tool fixed beforehand to the tooth to be extracted is engaged with the engagement section for the auxiliary tool, the tooth to be extracted can be extracted via the auxiliary tool from the gums only by gripping the grip sections by hand for operation. Thus, tooth extraction can be appropriately performed without damaging the tooth and gums carelessly. Moreover, as the auxiliary tool can be removed with a strong force using the pressing section as a fulcrum only by the operation of gripping the grip sections, the tooth can be extracted easily and surely without requiring a large amount of labor. In addition, as the same operation enables tooth extraction regardless of a dental position or shape, all types of teeth can be extracted with the same kind of tooth extraction appliance. Therefore, free from any possible careless damages to the inside of the oral cavity of a patient, even powerless dentists including elderlies and women can perform a tooth extraction treatment with a small amount of labor.

Moreover, in the above-mentioned tooth extraction appliance, the auxiliary tool (40) is a member integrally including a shank section (43) to be inserted into the tooth to be extracted (T1) and a head section (42) provided at the upper end of the shank section (43). The engagement section (12) for the auxiliary tool (40) may be the tip of the arm member (10), to which a recessed section (12a) is formed for hooking the head section (42) of the auxiliary tool (40) thereto.

According to this configuration, by using the member integrally including the shank section (43) to be inserted into the teeth to be extracted (T1) and the head section (42) provided at the upper end of the shank section (43), the tooth to be extracted can be extracted surely from the gums via the auxiliary tool even with a simple configuration.

In addition, in the above-mentioned tooth extraction appliance, the pressing section (22) may be a plate-like part spreading in a surface perpendicular to the rotating surface of the arm members (10, 20). Accordingly, with a simple configuration, as the pressing section can be applied to the supporting part easily and surely, the tooth to be extracted can be extracted easily and surely.

Further, in the above-described tooth extraction appliance, the tip of the engagement section (12) for the auxiliary tool may be arranged at a position more distant from the connecting section (11) along the longitudinal direction of the arm members (10, 20) than the tip of pressing section (22) is.

According to this configuration, as the action of tooth extraction can be performed easily via the auxiliary tool engaged with the engagement section for the auxiliary tool, the tooth to be extracted can be extracted easily and surely. It should be noted that the bracketed reference numerals are examples of the elements of the embodiment described later.

### [Effect of the Invention]

According to the tooth extraction appliance of the present invention, tooth extraction can be performed appropriately without damaging the tooth and gums carelessly, tooth extraction can be performed easily and surely without requiring a large amount of labor, and all types of teeth can be extracted only with one type of appliance.

### [Brief Description of the Drawings]

FIG. 1 is a view illustrating a tooth extraction appliance in accordance with one embodiment of the present invention;
FIGs. 2A and 2B are views illustrating a detailed configuration of a tip of a tooth extraction appliance, of which FIG. 2A is an A-arrow view of FIG. 1 and FIG. 2B is a B-arrow view of FIG. 1; and
FIGs. 3A to 3C are views illustrating how to use a tooth extraction appliance.

### [Mode for Carrying out the Invention]

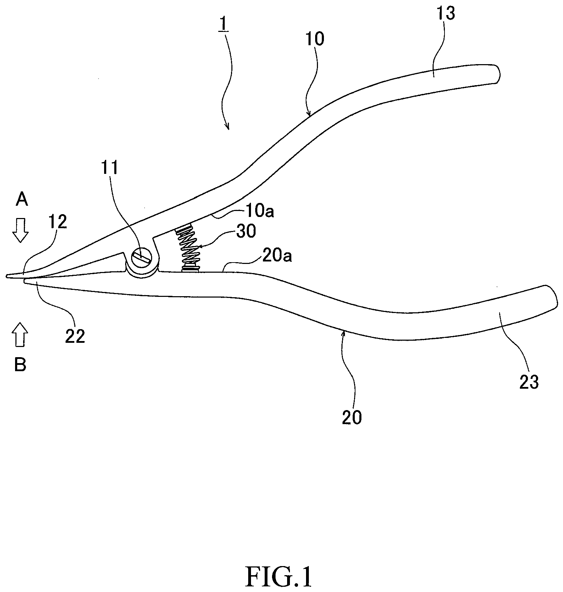

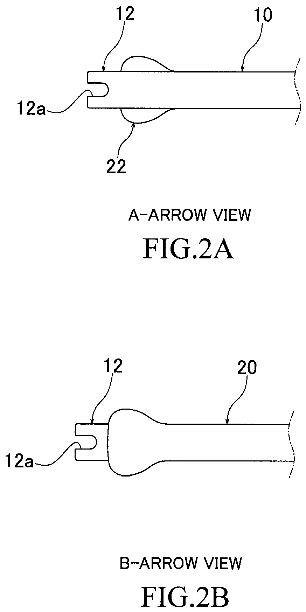

Embodiments of the present invention will be described in detail as below with reference to the accompanying drawings. FIG. 1 is a view illustrating a tooth extraction appliance in accordance with one embodiment of the present invention. FIGs. 2A and 2B are views illustrating a detailed configuration of the tip of the tooth extraction appliance, of which FIG. 2A is an A-arrow view of FIG. 1 and FIG. 2B is a B-arrow view of FIG. 1.

The tooth extraction appliance 1 includes a pair of arm members 10, 20. The arm members 10, 20 are formed of metal such as stainless steel, titanium or titanium alloy. It should be noted that the appliance 1 may be made of any materials other than metal including suitable synthetic resin as far as they can secure necessary intensity. The pair of arm members 10, 20 are connected to each other in the middle thereof in the longitudinal direction (namely, at a position relatively near the tips of the pair of arm members), so as to rotate centering on a connecting shaft (namely, connecting section) 11, consisting of a screw or a pin, serving as a turning fulcrum.

At the tip of one of the arm members 10, a hooking section 12 for hooking a head section 42 of a screw 40 thereto, which will be described below, is formed. At the tip of the other of the arm members 20, an approximately plate-like pressing section 22 for being applied to a supporting part such as a tooth other than the tooth to be extracted is provided. The pressing section 22 is a section planar in shape spreading in a surface along the axial direction of the connecting shaft 11 (namely, a surface perpendicular to a rotating surface of the arm members 10, 20). The tip of the pressing section 22 is curved in shape. The pressing section 22 is greater in width than the other parts of the arm member 10. The hooking section 12 is the tip of the arm member 10 formed in a thin plate shape. This thin plate-like section is formed in a narrow plate shape spreading in the surface along the axial direction of the connecting shaft 11 (namely, the surface perpendicular to the rotating surface of the arm members 10, 20). And, at the hooking section 12, a recessed section 12a (see FIGs. 2A and 2B) is formed in an approximately U-shape from the tip of the hooking section 12 towards the rear side thereof in the longitudinal direction. The hooking section 12 is longer than the pressing section 22. The tip of the hooking section 12 is arranged so as to project from the connecting shaft 11 to a position more distant than the pressing section 22 is. In addition, the tip of the hooking section 12 is slightly warped outward (namely, toward the side away from the pressing section 22). The hooking section 12 is curved gradually in a direction away from the pressing section 22 toward the tip side. The surface of the tip of the hooking section 12 is substantially in parallel with the surface of the pressing section 22.

In addition, rear ends of the pair of arm members 10, 20 (behind the connecting shaft 11) serve as a pair of grip sections (namely, operating sections) 13, 23 for rotating the arm members 10, 20. Between inner surfaces 10a, 20a of the pair of arm members 10, 20 behind the connecting shaft 11, a coiled spring (namely, elastic member) 30 having elasticity is attached. The coiled spring 30 exerts a force to return to its original length when compressed. The coiled spring 30 applies a force to rear parts of the pair of arm members 10, 20 behind the connecting shaft 11 in the direction, in which the rear parts are spaced from each other (namely, in the direction, in which the gap therebetween is widened). Thus, on one hand, when the grip sections 13, 23 of the tooth extraction appliance 1 are not gripped by hand, namely, at initial positions thereof, the pressing section 22 at the tip of the appliance 1 is brought into contact with the hooking section 12, or in other words. On the other hand, when the pair of grip sections 13, 23 are gripped by hand for operation, the pair of arm members 10, 20 rotate centering on the connecting shaft (turning fulcrum) 11 against a biasing force of the coiled spring 30. Thus, the hooking section 12 rotates in the direction, in which the hooking section 12 is spaced from the pressing section 22.

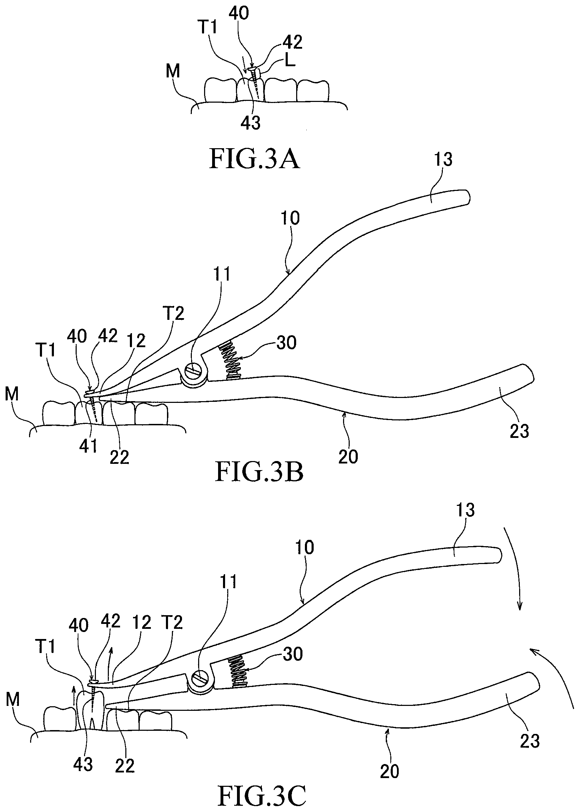

FIGs. 3A to 3C are views illustrating how to use the tooth extraction appliance 1. How to use the tooth extraction appliance 1 will be described with reference to these figures. As shown in FIG. 3A, a screw 40 made of such materials as metal is fixed beforehand to a tooth to be extracted T1 so that the screw 40 is inserted into the tooth T1. The screw 40 is attached so that there is a gap L between the head section 42 and the tooth to be extracted T1 by inserting only a part of the tip of the shank section 43 into the tooth to be extracted T1. And as shown in FIG. 3B, the pressing section 22 of the tooth extraction appliance 1 is applied to the supporting part such as a tooth T2 next to the tooth to be extracted T1, then the tip of the hooking section 12 is inserted into the gap L between the head section 42 of the screw 40 and the tooth T1, and the recessed section 12a is hooked to the head section 42 of the screw 40. When gripping the grip sections 13, 23 of the tooth extraction appliance 1 by hand in that state, as shown in FIG. 3C, the hooking section 12 rotates upward against the pressing section 22 centering on the connecting shaft (fulcrum) 11, thereby pulling up the head section 42 of the screw 40. In this manner, the tooth to be extracted T1, into which the screw 40 is inserted, can be pulled out of the gums M.

As described above, the tooth extraction appliance 1 of the present invention, includes the pair of arm members 10, 20, each of which is rotatable centering on the connecting section 11 serving as the turning fulcrum, the grip sections 13, 23 provided to the rear ends of the pair of arm members 10, 20 for operating the appliance 1 by gripping by hand, the hooking section (namely, the engagement section for the auxiliary tool) 12 provided at the tip of one of the arm members 10 for being hooked to and engaged with the head section 42 of the screw 40, and the pressing section 22 provided to the tip of the other of the arm members 20 and applied to another tooth (namely, the supporting part) T2 adjacent to the tooth to be extracted T1. And, in the state where the pressing section 22 is applied to the other tooth T2 (namely, the supporting part) in adjacent to the tooth to be extracted T1, and the screw 40 fixed beforehand to the tooth to be extracted T1 is engaged with the hooking section 12, the grip sections 13, 23 are operated by gripping the grip sections 13, 23. Thus, the tooth extraction appliance 1 is configured so that the tooth to be extracted T1 is extracted via the screw 40 from the gums M.

According to the tooth extraction appliance 1 of the present invention, in the state where the pressing section 22 is applied to the other tooth T2 in adjacent to the tooth to be extracted T1, and the screw 40 fixed beforehand to the tooth to be extracted T1 is hooked to and engaged with the hooking section 12, the tooth to be extracted T1 can be extracted via the screw 40 from the gums M only by gripping the grip sections 13, 23 for operation. Therefore, tooth extraction can be appropriately performed without damaging the tooth and gums carelessly. Moreover, as the screw 40 can be removed with a strong force only by the operation of gripping the grip sections 13, 23, the tooth can be extracted easily and surely without requiring a large amount of labor. In addition, as a same operation enables tooth extraction regardless of a dental position or shape, all types of teeth can be extracted with the same kind of tooth extraction appliance 1. Therefore, free from any possible careless damages to the inside of the oral cavity of a patient, even powerless dentists including elderlies and women can perform a tooth extraction treatment with a small amount of labor.

Also, the screw 40 serving as the auxiliary tool according to the present invention is the member integrally including the shank section 43 to be inserted into the tooth to be extracted T1 and the head section 42 provided at the upper end of the shank section 43. And, the hooking section 12 serving as the engagement section for the auxiliary tool according to the present invention is the tip of the arm member 10, to which the recessed section 12a is formed for hooking the head section 42 of the screw 40 thereto.

According to this configuration, the tooth to be extracted T1 can be extracted surely from the gums M via the screw 40 even with a simple configuration.

In addition, in the above-mentioned tooth extraction appliance 1, the pressing section 22 is the plate-like part spreading in a surface perpendicular to the rotating surface of the arm members 10, 20. Accordingly, as the pressing section 22 can be applied to the supporting part T2 easily and surely with a simple configuration, the tooth to be extracted T1 can be extracted easily and surely.

Further, in the above-described tooth extraction appliance 1, the tip of the hooking section 12 serving as the engagement section for the auxiliary tool is arranged at a position more distant from the connecting section 11 along the longitudinal direction of the arm members 10, 20 than the tip of pressing section 22 is.

According to this configuration, as the action of tooth extraction can be performed easily via the screw 40 engaged with the hooking section 12, the tooth to be extracted T1 can be extracted easily and surely.

While one embodiment of the invention has been described above, the invention is not limited to the above-mentioned embodiment, but various modifications are possible within the scope of the technical idea as defined in the claims, the specification, and the drawings. For example, instead of the screw 40 to be inserted into the tooth to be extracted as described in the present embodiment, a nail may be used. Moreover, as the specific and detailed shape of the above-described tooth extraction appliance 1 is merely illustrative, the hooking section of the tooth extraction appliance according to the present invention may have any shape other than that described above as far as it can hook the head section of the screw or the nail. And, the pressing section may have any shape other than that described above as far as it can be suitably applied to the supporting part when pulling up the screw or the nail.

## Claims

1. A tooth extraction appliance comprising:
a pair of arm members, each of which is rotatable centering on a connecting section serving as a turning fulcrum;
grip sections provided to rear ends of the pair of arm members for operation by gripping by hand;
an engagement section for an auxiliary tool provided to a tip of one of the arm members for being engaged with the auxiliary tool fixed beforehand to a tooth to be extracted; and
a pressing section provided to a tip of the other of the arm members and applied to a supporting part for pressing the supporting part,
wherein in the state where the pressing section is applied to the supporting part in adjacent to the tooth to be extracted, and the auxiliary tool fixed beforehand to the tooth to be extracted is engaged with the engagement section for the auxiliary tool, the tooth to be extracted is extracted via the auxiliary tool from gums by gripping the grip sections by hand for operation.

2. The tooth extraction appliance according to claim 1,
wherein the auxiliary tool is a member integrally including a shank section to be inserted into the teeth to be extracted and a head section provided at an upper end of the shank section, and
wherein the engagement section for the auxiliary tool is a tip of the arm member, to which a recessed section is formed for hooking the head section of the auxiliary tool thereto.

3. The tooth extraction appliance according to any one of claims 1 and 2, wherein the pressing section is a plate-like part spreading in a rotating surface perpendicular to a rotating surface of the arm member.

4. The tooth extraction appliance according to any one of claims 1 to 3, wherein a tip of the engagement section for the auxiliary tool is arranged at a position more distant from the connecting section along a longitudinal direction of the arm member than a tip of the pressing section is.
